# EUROPEAN PATENT APPLICATION

(11) **EP 2 439 949 A1**
(43) Date of publication of application: **11.04.2012**
(21) Application number: 10306085.1
(22) Date of filing: 05.10.2010
(51) Int. Cl.: H04N 7/24

(54) **A system, a method, a computer program and a computer program product for distributing media in a computer network**

(71) Applicant: Alcatel Lucent, 75007 Paris (FR)
(72) Inventor: Sienel, Jürgen, 71229 Leonberg (DE); Laible, 70469 Stuttgart (DE); Domschitz, Peter, 70191 Stuttgart (DE); Bauer, Markus, 91257 Pegnitz (DE)
(74) Representative: Brose, Gerhard

(57) **Abstract**

The invention concerns a method for distributing media in a computer network
- at least one media source, in particular at least one camera, is adapted to capture and send at least one media stream to at least one first server,
- said at least one first server is adapted to receive said at least one media stream from said at least one media source, in particular said at least one camera, and to send said at least one media stream to at least one second server,
- said at least one second server is adapted to determine at least one personalized media stream depending on at least one of said at least one media stream and information about at least one desired view, in particular viewing angle or picture detail, received by said at least one second server from at least one client, and to send said at least one personalized media stream, in particular to the respective at least one client, and wherein
- said at least one client is adapted to determine said desired view, in particular said viewing angle or picture detail, and send it, in particular to the respective at least one second server, and to receive said at least one personalized media stream.

## Description

### Field of the invention

A system, a method, a computer program and a computer program product for distributing media in a computer network

### Background

In content delivery networks, a previously recorded media stream or a real-time media stream is distributed from a single source to multiple clients. For a large number of clients, for example 200 million clients, this works because the same media stream is sent from said single source to all clients, i.e. viewers. This means that at the single source content is captured, processed, if applicable stored, and send out as single media stream, if applicable in real-time.

However this also means that each viewer has to view the exact same content without ability to influence the current view.

In existing live web-cam solutions, a viewer may control the content of a media stream captured by the web-cam. Typically the viewer is allowed to move the web-cam via a control panel, e.g. provided by a web interface. However, only one viewer is allowed to control the web-cam at a given point in time. This means that even if the media stream is received by multiple viewers, each viewer has to view the exact same content, without ability to influence the current view.

The individual experience of a viewer is therefore limited.

### Summary

The object of the invention is thus to improve the viewer's experience when viewing a media stream.

The main idea of the invention is to distribute media in a computer network, wherein at least one media source, in particular at least one camera, is adapted to capture and send at least one media stream to at least one first server, said at least one first server is adapted to receive said at least one media stream from said at least one media source, in particular said at least one camera, and to send said at least one media stream to at least one second server, said at least one second server is adapted to determine at least one personalized media stream depending on at least one of said at least one media stream and information about at least one desired view, in particular viewing angle or picture detail, received by said at least one second server from at least one client, and to send said at least one personalized media stream, in particular to the respective at least one client, and wherein said at least one client is adapted to determine said desired view, in particular said viewing angle or picture detail, and send it, in particular to the respective at least one second server, and to receive said at least one personalized media stream. This way, distributed resources, for example of a computer cloud, are exploited to deliver personalised media streams to a very large number of clients, i.e. viewers. The system excels where either two or more media streams are sent by two or more media sources to two or more first servers, and wherein two or more second servers send two or more personalized media streams to two or more clients. However the system also scales dynamically to any number of media sources, media streams, first servers, second servers or clients, including one of each or any permutation of numbers of them.

Advantageously, at least two media sources, in particular two cameras, provide adjacent or partly overlapping parts of a view, in particular two cameras, capture adjacent geographic or geo-spatial areas seamlessly or with partial overlap. This way, camera signals are blended to reduce the amount of data of said at least one media stream or said at least one personalized media stream, hence reducing required transmission bandwidth and enhancing the experience of the viewer further, particularly in a multi-camera setup.

Advantageously, said at least one media source, in particular said at least one camera, is selected by said at least one first server from said at least one media source, in particular said at least one camera, depending on information about the geographic location or the orientation of the respective at least one media source, in particular at least one camera, or the content of at least a part of said at least one media stream. This way, content meaningful to a viewer is easily identified and appropriate resources, i.e. media sources, in particular cameras are selected.

Advantageously, only media streams relevant for determining said personalized media stream on said at least one second server are identified from said at least one media stream depending on information about said desired view, in particular said desired view angle or picture detail, and send from said at least one first server to said at least one second server. This way, the load on a computer network is reduced.

Advantageously, said information about said desired view, in particular said desired view angle or picture detail, is determined by said at least one client from user input or information about an geo-spatial orientation of said at least one client, in particular determined by said at least one client from user interface and sensors respectively. This way said viewer is provided with an easy way of selecting the desired view angle or picture detail to be used for determining said at least one personalised media stream. In case of user input, for example an arrow on a touch pad is used to allow easy rotation of the view. In case of geo-spatial orientation, for example information about the orientation of the client, e.g. its orientation relative to the Earth's magnetic poles, is for example gathered from sensors, e.g. a compass, in the client. Sensors are for example absolute position transducers or orientation sensors. The user in this case controls the desired view by moving the client with his hands.

Advantageously, said system is adapted to connect or disconnect at least one of said at least one media sources, in particular said at least one camera, without interruption of said personalized media stream. This way, the user experience is further enhanced.

Advantageously said at least one media stream is at least one real-time media stream. This allows real-time interaction further improving the viewing experience.

Advantageously multiple media sources, in particular multiple cameras, send multiple media streams. This allows more flexibility in choice for the viewing angle or picture detail, as a wider geographic area is covered by multiple cameras. The viewing experience is further enhanced by this.

Advantageously said at least one client is adapted to display said at least one media stream, in particular in real-time, or to store said at least one media stream. This way said at least one media stream is presented or available for presentation in the desired view.

Further developments of the invention can be gathered from dependent claims and the following description.

### Brief description of the figures

In the following, the invention will be explained further making reference to the attached drawings.
Figure 1 schematically shows part of a computer network.
Figure 2 schematically shows a flowchart showing some typical steps in a first method according to the invention.
Figure 3 schematically shows a flowchart showing some typical steps in a second method according to the invention.
Figure 4 schematically shows part of a first camera setup according to a first example.
Figure 5 schematically shows part of a second camera setup according to a second example.

### Description of the embodiments

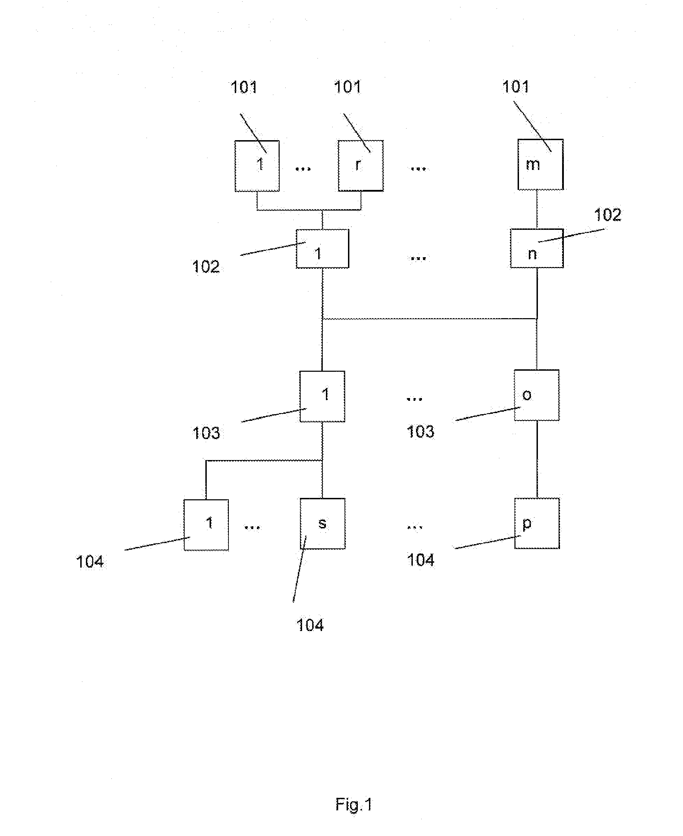

Figure 1 shows a part of a computer network 100.

Said computer network 100 comprises data links and devices, for example media sources, e.g. cameras 101, first servers 102, second servers 103 or clients 104.

Said data links are, for example, links according to the well-known internet protocol (IP). Alternatively, said data links may be any other type of data link, like wireless links according to the IEEE 802.11 standard.

Said devices for example include a processor, sending receiving means, like network cards, volatile or non volatile storage, display, keyboard, graphical user interface or the like.

Furthermore said devices include additional sensors. In case of geo-spatial orientation, for example information about the orientation of said client 104 or said media source, e.g. said camera 101, e.g. it's orientation relative to the Earth's magnetic poles, is for example gathered from said sensors, e.g. a compass, in said client 104 or said media source, e.g. said camera 101. Said sensors are for example absolute position transducers or orientation sensors.

Said devices are adapted to connect to said computer network 100 via said data link, and to communicate using messages, for example according to the well-known internet protocol (IP).

Said computer network 100 comprises, for example, m media sources, for example m cameras 101.

Furthermore said computer network 100 comprises, for example, n first servers 102, o second servers 103 and p clients 104.

Any one of said m media sources, e.g. m cameras 101, is adapted to at least temporarily connect to at least one of said n first servers 102 via said data link. Similarly each of said first servers 102 is adapted to accept connections of any one of said m cameras 101.

As depicted in Figure 1, r media sources, e.g. r cameras 101, are connected to the same first server 102 via said data link. The number r may be any number of media sources or cameras 101.

Alternatively or additionally each of said m media sources, e.g. m cameras 101, is connected to a single first server 102 or to multiple first servers 102 at the same time.

As depicted in Figure 1, s clients 104 are connected to the same second server 103 via said data link. The number s may be any number of clients 104.

In particular any one of said p clients 104 is adapted to at least temporarily connect to at least one of said o second servers 103 and via said data link. Similarly each of said second servers 102 is adapted to accept connections of any one of said p clients 104.

As depicted in Figure 1 any of said n first servers 102 is connected to each of said o second servers 103 and vice-versa via said data link. However it is not required that each of said first servers 102 is connected to each of said second servers 103 or vice-versa. Only a subset of said first servers 102 may be connected to a subset of said second servers 103 instead. Said computer network 100 may comprise of gateways, i.e. servers, that interconnect said subsets of servers.

Alternatively or additionally in said computer network 100 stream switching matrixes may be used for n to o selection.

Any one of said p clients 104 is adapted to at least temporarily connect to at least one of said o second servers 103 via said data link. Similarly each of said second servers 102 is adapted to accept connections of any one of said p clients 104.

The numbers m, n, o, p, q, r, s may be any number for example 60 or 24. They may be lower, e.g. 1 or higher, e.g. equal or larger than 1000.

In the example shown in Figure 1, s clients 104 are connected to the same second server 103 via said data link. The number s may be any number of clients 104.

Alternatively each of said p clients 104 may be connected to a single second server 103 or to multiple second servers 103 at the same time.

This means that at least one media source 101, at least one first server 102, at least one second server 103 and at least one client 104 form a system wherein at least one media stream and at least one personalised media stream are transmitted. This also means that the invention scales to any number of media sources, e.g. cameras 101, first servers 102, second servers 103 or clients 104 as well as media streams and personalised media streams.

Said media source, e.g. said camera 101 is adapted to send a media stream to said first server 102 via said data link. Said media source is for example adapted to send said media stream from a volatile or non volatile storage via a network interface like a network card. In case of using said camera 101, said camera 101 is for example adapted to capture content of said event, processing it into a compressed data format suitable for sending said media stream and sending said media stream via a network interface and said data link.

Said media source, e.g. said camera 101, may be adapted to send said media stream to multiple first servers 102 at the same time.

An angle of view or field of view in photography describes the angular extent of a given scene that is captured by said camera 101. For said cameras 101 their angles of view for example defines the content that is captured by said cameras 101 and send in said m media streams. For individual cameras 101 their angles of view depend on the respective geographic camera position and orientation in space.

Said first server 102 is adapted to receive and process said m media streams, for example to perform distortion correction or cropping of pictures contained in said media stream.

Furthermore, said first server 102 is adapted to receive said r media streams from said r media sources, e.g. said r cameras 101, and send at least one of said r media streams to at least one of said o second servers 103.

Preferably said first server 102 is adapted to perform the task of processing said media stream in real-time. Processing in this context comprises but is not limited to receiving and sending said media stream as well as data manipulation, e.g. cropping, distortion correction, performed on said media stream. Real-time means that all computation on said first server 102 is finished within a first deadline from the start of processing of said media stream. Said first deadline is for example 5 milliseconds.

Said second server 103 is adapted to receive said at least one of said m media streams, e.g. said at least one of said r media streams from said first server 102.

Said second server 102 may furthermore be adapted to receive additional information about said media stream, e.g. name, time, geographic location of the event captured or geographic location of the capturing device. Said additional information may be received within said media stream or via separate messages. Said additional information may be sent for example according to the well known MPEG4 standard.

Additionally said second server 103 is adapted to receive information about a desired view from at least one of said p clients 104. Said information about said desired view is for example information about a view angle or a picture detail desired by a viewer. Additionally or alternatively a zoom factor or horizontal or vertical angle of view desired by a viewer may be used.

View angle in this context means the angle from which said viewer wishes to look at said content received in said media streams, e.g. said event or said scene captured as content of said media streams by said m cameras 101.

Picture detail in this context means the detailed area which said viewer wishes to see of said content received in said media streams, e.g. of said content captured by said m cameras 101.

Said desired view is for example described using view angle and picture detail a viewer wishes to see. View angel may be defined as a geographical position and orientation of a virtual camera. Picture detail may be defined as a zoom factor relative to the whole angle of view said virtual camera is maximally capable of capturing. Any other form of describing the desired view, such as methods for describing graphics well known from vector graphics or raster graphics may be used as well.

Furthermore said second server 103 is adapted to identify from at least one of said m media streams media streams relevant to determine a personalized media stream containing pictures showing said event or scene according to said desired view.

For example said second server 103 is adapted to determine media streams relevant to determine said personalized media stream depending on said information about said view angle, picture detail and said name of the event captured in said media stream.

Furthermore said second server 103 is adapted to determine said personalized media stream depending on said relevant media streams and said information about said desired view. For example said personalized media stream is determined by using pictures cropped to the desired picture detail of a single relevant media stream.

Alternatively or additionally, multiple of said m media streams received by said second server 103 are identified as relevant media streams. For example pictures resembling said desired viewing angle and picture detail are determined depending of the pictures of said relevant media streams.

To that end for example three dimensional rendering techniques determining position and orientation of said virtual camera in space, as well as its view angle or picture detail depending on said view angle and said picture detail said viewer wishes to see may be used.

The content captured by said virtual camera and send as said personalized media stream may be determined from one or multiple pictures of said relevant media streams considering the position or orientation of said cameras 101 or their angles of view.

Said second server 103 is adapted to send said personalized media stream to at least one of said p clients 104. In particular said second server 103 is adapted to send said personalized media stream to the same client 104 that sent the information about said desired view to said second server 103.

Preferably said second server 103 is adapted to perform the task of processing said media stream in real-time. Processing in this context comprises but is not limited to receiving and sending said media stream as well as data manipulation, e.g. cropping of pictures received in said media stream to said desired picture detail or determining from multiple pictures received in multiple media streams said pictures resembling the desired viewing angle. Real-time means that all computation on said second server 103 is finished within a second deadline from the start of processing of said media stream. Said second deadline is for example 5 milliseconds.

Preferably in a multi-camera setup the view angles of neighbouring cameras are aligned to capture perfectly adjacent pictures of the whole scene.

In a camera setup for example where cameras capturing neighbouring geographic or geo-spatial areas are used, picture captured by individual cameras do not necessarily align exactly to a whole scene, as perfectly adjacent picture would.

Therefore optionally overlap removing is performed where applicable in order to generate said personalized media stream. Preferably said first server 102 is adapted to perform this optional step in order to reduce the amount of (redundant) data that needs to be transmitted to the remote location, i.e. said second server 103. Alternatively said second server 103 may be adapted to perform this optional step for example in case said first server 102 is not capable of performing this step.

Also optionally parts of said whole scene of said event that cannot be determined from said pictures of said relevant media streams are filled with default content, e.g. black, in order to improve robustness by continuing to send said personalized media stream even if some parts of the whole scene are missing. Said first server 102 is for example adapted to perform this optional step. Alternatively said second server 103 may be adapted to perform this optional step.

Another optional step, that may be performed by said first server 102 or said second sever 103 may be optical distortion correction, rectification ant the like. The best device for performing this task may be selected depending on the device's capability.

Said clients 104 are adapted to determine said information about said desired view.

Said clients 104 are adapted to determine first control commands in order to request said personalized media stream. Said first control commands may contain additional information like an internet protocol address of said clients 104.

Said client is for example adapted to determine said information about said desired view or said first control commands depending on user input, e.g. via a graphical user interface, touchpad or keyboard.

Said information about said desired view, for example said desired view angle or picture detail, is determined by said client 104 from user input or information about a geo-spatial orientation of said client 104.

In case of user input, for example an arrow on a touch pad is used to allow easy rotation of the view.

In case of geo-spatial orientation, for example information about the orientation of said client 104 is for example gathered from said sensors in said client 104. Said sensors are for example absolute position transducers or orientation sensors. The user in this case controls the desired view by moving said client 104 with his hands. Said geo-spatial orientation is for example said client's orientation relative to the Earth's magnetic poles that is for example gathered from a built-in compass. For example holding said client 104 facing North N results in said information about said geo-spatial orientation.

Said first control commands are for example standard hyper text mark up language (HTTP) commands, like "get" that are send from said client 104 upon a user clicking on a link to media streams of said event on a web-page displayed by said client 104 to said user.

Alternatively, said client 104 sends continuously sensor signals, e.g. sensor vectors, to said second server 103 which analyzes and interprets said sensor signals to calculate for example said virtual viewpoint and orientation. In this case said second server 103 is adapted to process said sensor signals, e.g. said sensor vectors, accordingly.

Said web-page may be hosted by said first server 102 or any other computer suitable for hosting web-pages in said computer network 100. Hosting in this context means providing the data relevant for displaying web-pages in said computer network 100 for example according to the well known hyper text markup language (HTML).

To this end an operator of said cameras 101 may setup said cameras 101 and register said media streams with said web-page by storing a link to said media streams on said web-page.

Any other type of making said media streams accessible to said clients 104 may be used. In particular said media sources, e.g. said cameras 101 may be adapted to broadcast, multicast or unicast said media streams.

Similarly said first server 102 or said second server 103 may be adapted to broadcast, multicast or unicast said media streams and said at personalized media streams respectively.

Any other way of distributing said media stream may be used as well. Methods for distributing media streams are well known to the person skilled in the art.

Optionally said second server 103 and said first server 102 may be adapted to communicate second control commands depending on said desired view and send said second control commands. Said second control commands are for example instructions from said first server 102 to only send media streams relevant for determining said personalized media stream, that cause said first server 102 to only send the requested, i.e. relevant, media streams to said second server 103. This way excessive load on the data links may be reduced, because not all of said m media streams need to be send from said first server 102 to said second server 103. Said second control commands may be hyper text transfer protocol (HTTP) command, e.g. "get".

Alternatively said second control commands may be commands according to the well known session initiation protocol (SIP).

Said first server 102 or said second server 103 may comprise of specific processor hardware suitable to be configured to perform the abovementioned tasks, e.g. application-specific integrated circuit (ASIC), Field-programmable gate arrays (FPGA) .

In case of application-specific integrated circuit (ASIC), from said computers of said computer network 100 a computer comprising of a suitable application-specific integrated circuit (ASIC) may be selected as said first server 102 or said second server 103.

In case of field-programmable gate arrays (FPGA) or generic processors, from said computers of said computer network 100 a computer comprising a field-programmable gate arrays (FPGA) may be selected and programmed as said first server 102 or said second server 103, e.g. using the executable code required to perform the respective tasks.

Alternatively or additionally, more than one of said computers of said computer network 100 may be used as a virtual first server 102 or a virtual second server 103. This means that the tasks described above, i.e. receiving, processing, if applicable storing and sending of any of said media streams or said personalized media streams may be performed by multiple physical computers of said computer network 100 that are joint virtually as said first server 102 or said second server 103. Joining said computers in this context means executing a computer program adapted to provide multiple physical hardware resources as a single virtual resource in said computer network 100. Such methods are well known for example from virtual machines and not further explained here.

Optionally the number of first servers 102 or second servers 103 used may dynamically be changed configuring the respective computers of said computer network 100, for example depending on the number and location of said media sources, e.g. said cameras 101, or said clients 104.

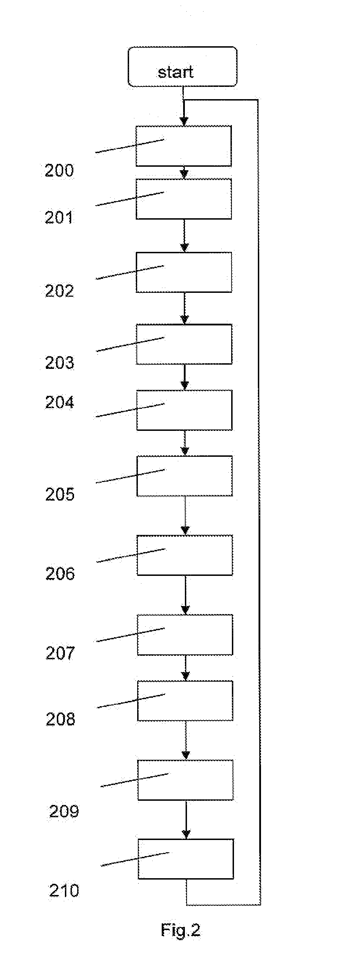

A first method according to a first example is described below making reference to the flow chart of Figure 2.

According to said first example m cameras 101 are used to capture content of said media steams and stream said media streams in real-time.

The number m of cameras 101 used depends for example on the camera setup required to optimally capture said event.

Said event is for example a meeting. The Camera setup may be chosen to provide a 360° round view of said event. Alternatively the Camera setup may be chosen to provide as many different viewing angles as possible.

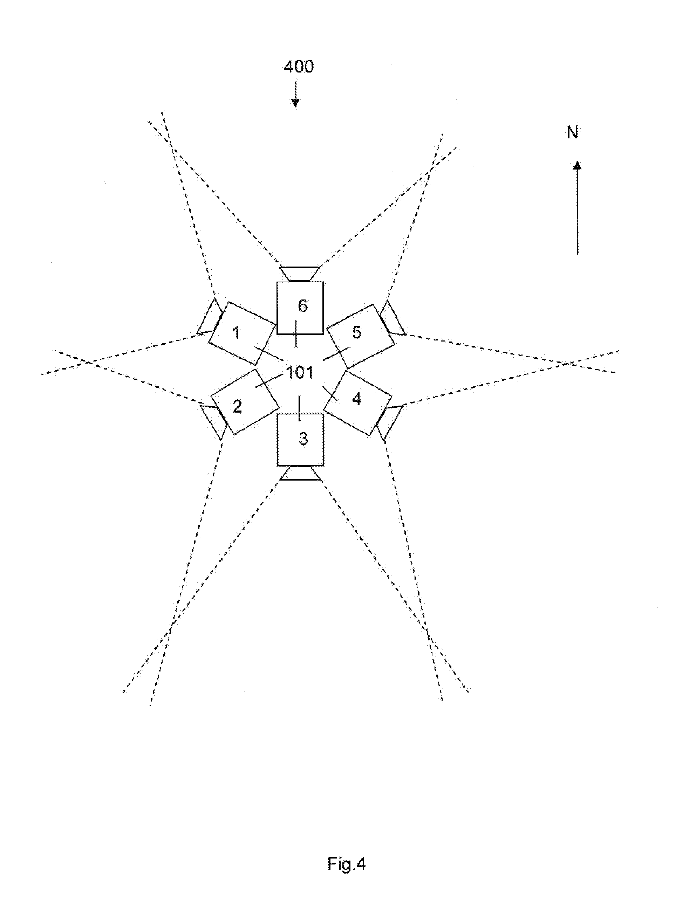

A first camera setup according to said first example is shown in Figure 4.

Figure 4 shows part of a meeting room 400 in which m=6 cameras 101 are used to capture a 360° round view of said meeting room 400. Said 6 cameras 101 are connected to the same first server 102, i.e. n=1. Said 1 first server 101 is for example in said meeting room 400.

Alternatively multiple first servers 101 may be used, for example to reduce the processing load on an individual first server 101.

Within said conference room, according to said first example the geo-spatial orientation of said cameras 101 relative to the Earth's magnetic field is assigned with a number identifying the respective cameras 101 and stored in a database, e.g. on said first server 102. In Figure 4 magnetic north pole is indicated by an Arrow and N, and the cameras 101 are numbered 1 to 6. The camera facing North N is in said first example the camera 101 marked with number 6 in Figure 4.

Furthermore dashed lines in Figure 4 indicate the angles of view of the individual cameras 101. According to said first example, the angles of view overlap between neighbouring cameras 101.

According to said first example, attendants of said meeting that are not in the meeting room 400 participate in said meeting using said p clients 104.

Said p clients 104 are for example laptop computers, desktop computers or mobile phones adapted to connect to said computer network 100. According to said first example p=2 clients 104 are used by two attendants to participate in said meeting.

Optionally said clients 104 and said first server 102 are adapted to establish a voice connection from said clients 104 to said first server 102 in order to allow said attendants to speak in said meeting. Said voice connection is for example a session initiation protocol (SIP)/real time transport protocol (RTP) connection.

Said first method according to said first example starts for example when an attendant of said meeting using a power on button to start said first server 101 and said 6 cameras 101.

Alternatively said clients 104 may be adapted to start said first method, e.g. by recognizing that a button was pressed on said client 104 and determine and sending said first control commands in order to request said personalized media stream.

According to said first example, said desired view is defined by said attendants using said clients 104 by holding said client 104 in the desired geo-spatial position relative to the Earth's magnetic field.

For example a first attendant hold the respective client 104 facing North N. This prompts said client 104 to send said information about said desired view in said first control commands to the respective second server 103.

After the start a step 200 is executed.

In said step 200, cameras 101 available to capture and provide media streams are determined.

For example, all cameras sending media streams with pictures are selected. Additionally, the number m of available cameras is set, in said first example to m=6. Alternatively said number m is set by an attendant of said meeting or an operator

Alternatively a geographical position and geo-spatial orientation of said cameras 101 is used to select cameras 101 that are at the desired geographical location and have the correct geo-spatial orientation to capture said event. Afterwards, a step 201 is executed.

In said step 201, said first server 102 waits until all 6 pictures of said 6 media streams are received by from said 6 cameras. Afterwards, an optional step 202 is executed.

In said optional step 202, said 6 pictures of said 6 media streams are processed by said first server 102, for example to adapt view plane, correct distortion or perform cropping. Afterwards, a step 203 is executed.

In said step 203, a number p and the address of clients 104 currently desiring to view said media stream as a personalised media stream is determined. For example said first control commands from said clients 104 are analysed. In said first example said number is set to p=2 and said addresses are two internet protocol addresses of the respective client 104 after receiving the respective request to receive a personalized media stream from said 2 clients 104. Alternatively said addresses or said number p of clients may be set by an attendant.

Afterwards, a step 204 is executed.

In said step 204, a location most suitable for determining said personalised media stream is determined for each of said client 104. This means said o second servers 103, are determined from information about said computer network 100. For example, said computer network 100 is constantly monitored for number of hops, latency and bandwidth available in data links as well as for routes to said clients 104 desiring to view said personalised media streams. Methods determining appropriate second servers 103 may include optimisation algorithms well-known to persons skilled in the art.

In said first example, said addresses of said 2 clients 104 are used to identify as said second servers 103 the computers suitable to execute the task of said second server 103 and being closest to the respective clients 104. Close in this context means for example resulting in the least number of hops, highest bandwidth or lowest latency in the data links between said clients 104 and said second servers 103.

For example all computers of said computer network 100 suitable to perform the task of said second servers 103 are stored in a database. In this case for example the computer of said computer network 100 having the least number of hops between itself and said client 104 is selected from said suitable computers as said second server 103.

In said first example for p=2 clients 104 two computers of said computer network 100 are selected as o=2 second servers 103. Alternatively, the same second server 103 (o=1) may be used if this results from above mentioned considerations. This would additionally lower the load on said computer network 100, because said media streams need to be sent from said first server 102 only to one second server 103. Alternatively said number p and o are set by an attendant of said meeting or an operator. Alternatively said second servers 103 are selected by an attendant of said meeting or an operator.

It is to be noted, that generally the distance between said first servers 102 and said second server 103 is large. Distance in this context may be geographic distance or number of hops, i.e. number of intermediate devices like routers in between said first servers 102 and said second servers 103. Compared to this distance the distance between said media sources, e.g. said cameras 101, and said first servers 102 on the one hand and said clients 104 and said second servers 103 on the other hand are short.

For example said first servers 102 and said second servers 103 are close to the edge of a wide area network. For example said media sources, e.g. said cameras 101, and said clients 104 are in two different local area networks connected to said wide area network via said first server 102 and said second server 103 respectively.

Particularly said first servers 102 and said second servers 103 may be connected via a large number of intermediate devices like routers. In contrast generally said media sources, e.g. said cameras 101, and said clients 104 are connected to said first servers 102 and said second servers 103 via a limited number of intermediate devices only.

Furthermore it is to be noted that generally said media sources, e.g. said cameras 101, or said clients 104 may be portable devices with only limited processing resources and battery. Hence power consuming and processing intense tasks like real-time video processing that goes beyond capturing and sending of frames or receiving, storing or displaying frames, cannot be performed on these portable devices (at all or for a prolonged period of time).

Afterwards an optional step 205 is executed.

In said optional step 205, media streams relevant for determining said personalised media stream are selected.

For example all m media streams are selected as relevant as default, in case no second control commands are received from said second servers 103.

According to said first example said 6 media streams are selected as relevant.

Alternatively not all of said m media streams are selected as relevant. For example said second control commands are used to select only the media streams that were requested by said second servers 103.

Alternatively not all of said m media streams are sent to all of said o second servers 103, but only the media streams relevant for determining the personalised media stream on the respective second servers 103 are sent. Afterwards, a step 206 is executed.

As default for the case when said step 205 is not executed, all m media streams are considered relevant.

In said step 206, the pictures of said media streams relevant for determining said personalised media stream are sent to the respective second servers 103.

According to said first example, said 6 pictures of said 6 media streams are sent to said second server 103.

Afterwards, a step 207 is executed.

According to said first example p=2 clients 104 are connected to o=2 second servers 103. This means that said step 207 is performed on both of said o=2 second servers 103, thus allowing said p=2 clients 104 to select different desired views.

Said step 207 is performed individually for any of said clients 104, for example on any of said second servers 103 for any of said clients 104. Said step 207 is described below for one second server 103 and one client 104 using the example of said first attendant. It also applies in case more than one attendant or client 104 is connected to said second server 103 or to their respective second servers 103.

In said step 207 the following is performed:
According to said first example, as default the media stream of said camera 101 identified by the number 1 in Figure 4 is used as a default personalized media stream until said first control commands are received. Any other media stream may be used instead.

As soon as said information about said desired view of said first attendant is received in said first control commands from the respective client 104, said personalized media stream is determined by said second server 103 depending on said information about said desired view

The content captured by said virtual camera and send as said personalized media stream is determined from one or multiple pictures of said relevant media streams considering the position or orientation of said cameras 101 and their angles of view. Additionally overlapping sections in the Angles of view are removed or zoom factors are considered where applicable.

According to said first example the desired view is defined as facing North N. Therefore the geo-spatial position of said virtual camera, and said pictures captured by said virtual camera are determined as the media stream of the camera 101 with number 6 in Figure 4.

Alternatively, in case said desired view were defined as facing North-North-East, the geo-spatial position of said virtual camera were North-North-East and pictures from media streams of the cameras 101 with number 6 and 5 in Figure 4 were used to determine the pictures of said personalized media stream.

Furthermore geographic position and geo-spatial orientation of said m cameras 101 may be received from said m cameras 101 via said computer network 100, in order to consider the actual position of said m cameras 101, instead of relying on a planned camera setup.

This is particularly useful if camera positions are changeable by users, or mobile cameras 101 are used.

In this case, the appropriate cameras 101 are selected dynamically considering their geographical position and geo-spatial orientation.

Alternatively said cameras 101 are selected, depending on the pictures captured by them. For example picture recognition is used to achieve this.

Mechanisms may be applied to identify pictures of said relevant media streams that were taken at the same point in time. This means that only pictures taken at the same point in time are used to determine the pictures of said virtual media stream in order to eliminate effects resulting from delays in the transmission of said relevant media streams or the like.

Optionally mechanisms may be applied for smoothing the rotation of pictures in said personalized media stream, for example when rotating said client 104.

Afterwards a step 208 is executed.

In said step 208, said picture of said personalized media stream is sent to said client 104.

Afterwards a step 209 is executed.

In said step 209 said picture of said personalized media stream is displayed by said client 104.

Afterwards a step 210 is executed.

In said step 210 said desired view is determined and send as control command.

For example said desired view is determined from input by said attendants using said clients 104, e.g. from changes to the geo-spatial position relative to the Earth's magnetic field induced by a user holding said client 104 in the desired direction.

In said first example said client 104 sends said information about said desired view in said first control commands to the respective second server 103.

Afterwards said step 200 is executed.

Said first method ends upon a trigger at any time during streaming of said media streams or said personalized media stream. Said trigger may be an attendant pushing an off button on said first server 102 or said client 104.

Instead of executing said steps 200, 203 and 204 for each picture of said media stream, said steps 200, 203 and 204 may be skipped and only performed in less frequent intervals, e.g. every minute.

Instead of executing said steps in order described above, an asynchronous processing of said steps may be used. In this case additional mechanisms to assure data consistency may be applied according to well know methods for asynchronous computing in computer networks.

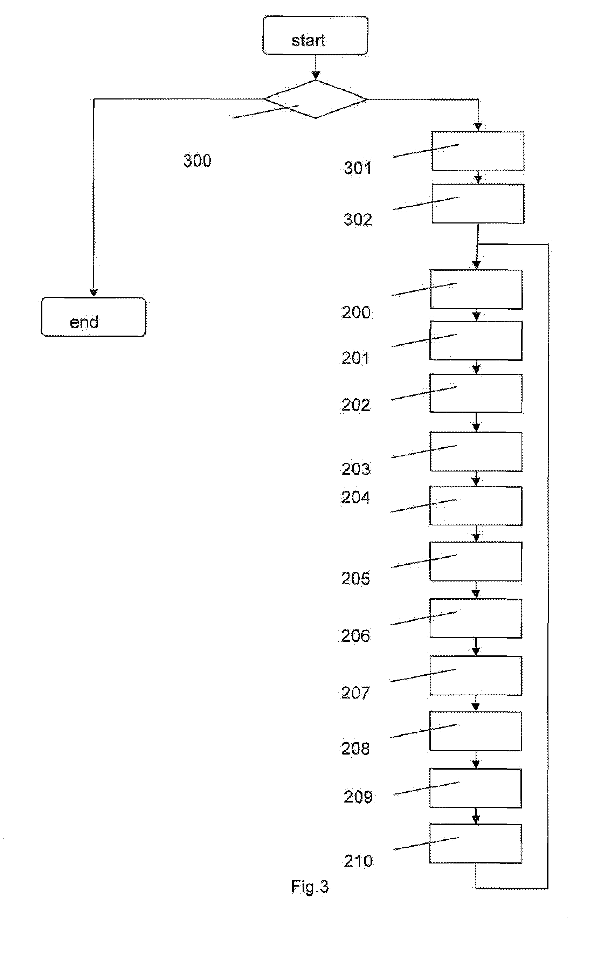

A second method according to a second example is described below making reference to the flow chart of Figure 3. Said second method may be performed as described below or similarly to said first method asynchronously as well.

According to said second example m cameras 101 are used to capture content of said media streams and stream said media streams in real-time.

The number m of cameras 101 used depends for example on the number of available cameras at the geographic location of said event. In case more cameras are available than needed to optimally capture said event, not all of said available cameras may be selected.

Said event is for example a soccer match. From all cameras 101 currently streaming a media stream from the geographic location of said soccer match, a camera setup may be chosen that allows providing as many different viewing angles of said soccer match as possible. Alternatively the Camera setup may be chosen to provide a 360° round view of said event.

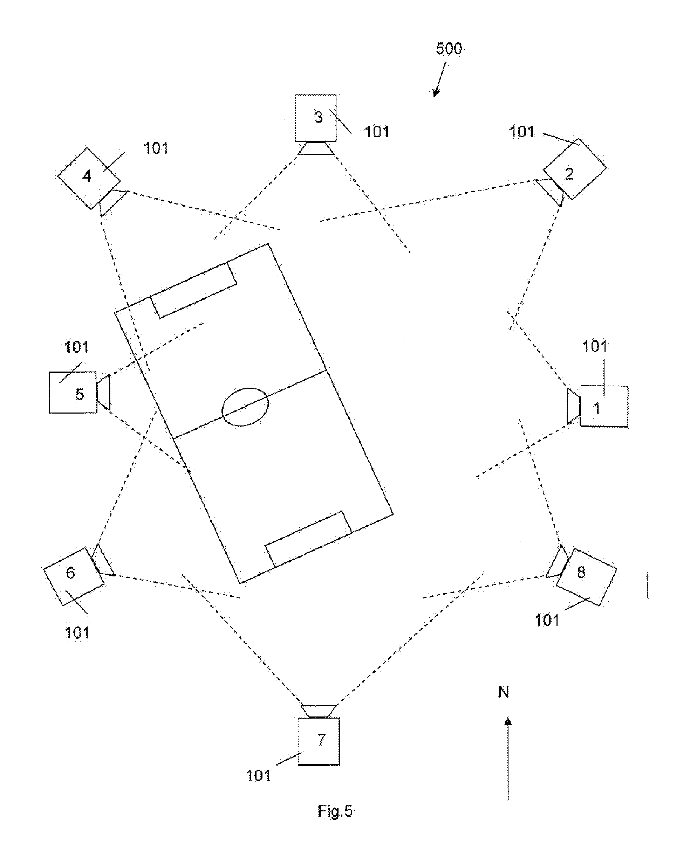

A second camera setup according to said second example is shown in Figure 5.

According to said second example camera owners attending said event, e.g. in a soccer stadium, registered their cameras 101 to a web community of mobile camera owners.

Methods for registering a device like a camera 101 in a web community are well known and not described here any further.

Said second method starts, for example, whenever a registered owner of said web community activates a media stream from his/her camera 101.

After the start a step 300 is executed.

In said step 300, a test is performed to identify other registered owners capturing the same event in media streams.

For example registered owners of cameras 101 currently capturing the same event may be looked up in a database, e.g. of a web-server running an application allowing camera owners to register.

In case other media streams are found the newly activated camera 101 is added to said second camera setup and the method ends. Otherwise, no second camera setup exists for the particular event and a step 301 is executed in order to create said second camera setup.

In said step 301, said database is updated to reflect the fact that said camera 101 is capturing said event. For example the geographic position of said camera 101 is stored in said database. In this case in order to update said data-base said camera 101 may be equipped with a means of transmitting its current location. Alternatively said registered owner may register his/her camera 101 with said data-base for a certain period of time at a certain location. This scenario may be used everywhere where large number of camera owners gather and capture the same event, e.g. a bicycle race or a concert. Afterwards a step 302 is executed.

In said step 302, from said computers of said computer network 100 suitable to perform the tasks of said first server 102, a computer is determined that is close to said camera 101. Close in this context means, that the data link between said suitable computer and said camera 101 has the least hops or highest bandwidth or lowest latency.

For example a computer of said computer network 100 close to an access point of camera 101 is selected and configured as said first servers 102.

The considerations regarding the selection of devices mentioned in said step 204 of said first method apply here as well.

Said configuration may be done by an administrator of said web community or automatically using computer programs running for example on said web-server.

Said selection may be done depending on information about said geographic location of said cameras 101, and information about the topology of said computer network 100. Said information about said geographic location and said topology may be available to said administrator or computer program from said data base, or generated by said computer program using any of the many well known computer network monitoring algorithms.

Alternatively, processing, i.e. some or all of the tasks performed by said first server 101, may occur in said media source, e.g. said camera 101 as well, if said media source, e.g. said camera 101 is capable to do so.

Afterwards said steps 200 to 209 of said first method are executed.

Figure 5 shows said soccer stadium 500 in which m=8 cameras 101 are used to capture a 360° round view of said soccer stadium 500. Said 8 cameras 101 are connected to n first servers 102, i.e. n=8. Said 8 first servers 101 are for example computers of said computer network 100 that are operated by a service provider in order to allow configured as wireless access.

The soccer field is indicated with solid lines in Figure 5. The stand of said soccer stadium is located around said field and not shown in Figure 5. Spectators of said event are located in said stand. According to said second example said cameras 101 are distributed evenly or unevenly depending on the location of the owner of said cameras 101 in said stand of said soccer stadium. Dashed lines in Figure 5 indicate the Angle of view of said cameras 101. Geographic North is also indicated by an Arrow and Letter "N".

Said second method ends like said first method.

Methods for accessing said data bases using said computer program automatically are well known to the person skilled in the art and not described further here. For example Application programming interfaces and representational state transfer architecture may be used to access different computers of said computer network 100, including said servers 102, 103 using said computer program.

In case compression algorithms, e.g. according to the well known Advanced Video Coding standard, are used to determine said media streams or said personalized media streams, said methods are adapted accordingly with the appropriate extraction and compression steps.

It is understood that all the steps described for said methods above may be implemented as computer program running on computers within said computer network 100. Preferably said computer program is split into parts that are distributed and instantiated on suitable computers within said computer network 100. For example steps 200 to 206 of said methods are performed by said first server 102, and steps 207 to 208 are performed by said second server 103. For example step 209 to 210 is performed by said client 104 and said steps 300 to 302 by said media source, e.g. said camera 101.

Said distribution may be static, e.g. chosen by a system administrator, or dynamic, e.g. by a part of said computer program adapted to transfer and instantiate parts of said computer program on any suitable computer within said computer network 100.

Said computer programme may be stored on a computer-readable medium as a computer-readable programme.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A system for distributing media in a computer network (100), wherein
- at least one media source, in particular at least one camera (101), is adapted to capture and send at least one media stream to at least one first server (102),
- said at least one first server (102) is adapted to receive said at least one media stream from said at least one media source, in particular said at least one camera (101), and to send said at least one media stream to at least one second server (103),
- said at least one second server (103) is adapted to determine at least one personalized media stream depending on at least one of said at least one media stream and information about at least one desired view, in particular viewing angle or picture detail, received by said at least one second server (103) from at least one client (104), and to send said at least one personalized media stream, in particular to the respective at least one client (104), and wherein
- said at least one client (104) is adapted to determine said desired view, in particular said viewing angle or picture detail, and send it, in particular to the respective at least one second server (103), and to receive said at least one personalized media stream.

2. The system according to claim 1, wherein at least two media sources, in particular two cameras (101), provide adjacent or partly overlapping parts of a view, in particular two cameras (101), capture adjacent geographic or geo-spatial areas seamlessly or with partial overlap.

3. The system according to claim 2, wherein said at least one media source, in particular said at least one camera (101), is selected by said at least one first server (102) from said at least one media source, in particular said at least one camera (101), depending on information about the geographic location or the orientation of the respective at least one media source, in particular at least one camera, or the content of at least a part of said at least one media stream.

4. The system according to claim 2, wherein only media streams relevant for determining said personalized media stream on said at least one second server (103) are identified from said at least one media stream depending on information about said desired view, in particular said desired view angle or picture detail, and send from said at least one first server (102) to said at least one second server (103).

5. The system according to claim 1, wherein said information about said desired view, in particular said desired view angle or picture detail, is determined by said at least one client (104) from user input or information about an geo-spatial orientation of said at least one client (104), in particular determined by said at least one client (104) from user interface and sensors respectively.

6. The system according to claim 2, adapted to connect or disconnect at least one of said at least one media sources, in particular said at least one camera (101), without interruption of said personalized media stream.

7. The system according to claim 1, wherein said at least one media stream is at least one real-time media stream.

8. The system according to claim 1, wherein multiple media sources, in particular multiple cameras (101), send multiple media streams.

9. The system according to claim 1, wherein said at least one client (104) is adapted to display said at least one media stream, in particular in real-time, or to store said at least one media stream.

10. A method for distributing media in a computer network (100), wherein
- at least one media stream is captured by at least one media source, in particular at least one camera (101), and sent by said at least one media source, in particular said at least one camera (101), to at least one first server (102),
- said at least one media stream is received by said at least one first server (102) from said at least one media source, in particular said at least one camera (101), and sent by said at least one first server (102) to at least one second server (103),
- at least one personalized media stream is determined by said at least one second server (103) depending on at least one of said at least one media stream and information about at least one desired view, in particular viewing angle or picture detail, received by said at least one second server (103) from at least one client (104),
- said at least one personalized media stream is sent by said at least one second server (103), in particular to the respective at least one client (104),
- said desired view, in particular said viewing angle or picture detail, is determined by said client (104) and send by said client (104) to the respective at least one second server 103, and wherein
- said personalized media stream is received by said at least one client (104).

11. A computer program for distributing media in a computer network (100), wherein said computer program, when executed on at least two computer (102, 103), causes at least one first computer (102) to receive at least one media stream from at least one media source, in particular at least one camera (101), and sent at least one of said at least one media stream to at least one second computer (103), and causes said at least one second computer (103) to determine at least one personalized media stream depending on said at least one of said at least one media stream and information about at least one desired view, in particular viewing angle or picture detail, received by said at least one second computer (103) from at least one client (104), and to send said at least one personalized media stream to the respective at least on client (104).

12. A computer program product for distributing media in a computer network (100) comprising a computer usable medium having a computer readable program, wherein said computer readable program, when executed on at least two computer (102, 103), causes at least one first computer (102) to receive at least one media stream from at least one media source, in particular at least one camera (101), and sent at least one of said at least one media stream to at least one second computer (103), and causes said at least one second computer (103) to determine at least one personalized media stream depending on said at least one of said at least one media stream and information about at least one desired view, in particular viewing angle or picture detail, received by said at least one second computer (103) from at least one client (104), and to send said at least one personalized media stream to the respective at least on client (104).

## Amended claims

### Amended claims in accordance with Rule 137(2) EPC.

**1.** A system for distributing media in a computer network (100), **characterized in that**
- at least one media source, in particular at least one camera (101), is adapted to capture and send at least one media stream to at least one first server (102),
- said at least one first server (102) is adapted to receive said at least one media stream from said at least one media source, in particular said at least one camera (101), and to send said at least one media stream to at least one second server (103),
- said at least one second server (103) is adapted to determine at least one personalized media stream depending on at least one of said at least one media stream and information about at least one desired view, in particular viewing angle or picture detail, received by said at least one second server (103) from at least one client (104), and to send said at least one personalized media stream, in particular to the respective at least one client (104), wherein
- said at least one client (104) is adapted to determine said desired view, in particular said viewing angle or picture detail, and send it, in particular to the respective at least one second server (103), and to receive said at least one personalized media stream, and
- wherein a location most suitable for determining said personalized media stream is determined for said at least one client (104) from information about said computer network (100).

**2.** The system according to claim 1, wherein at least two media sources, in particular two cameras (101), provide adjacent or partly overlapping parts of a view, in particular two cameras (101), capture adjacent geographic or geo-spatial areas seamlessly or with partial overlap.

**3.** The system according to claim 2, wherein said at least one media source, in particular said at least one camera (101), is selected by said at least one first server (102) from said at least one media source, in particular said at least one camera (101), depending on information about the geographic location or the orientation of the respective at least one media source, in particular at least one camera, or the content of at least a part of said at least one media stream.

**4.** The system according to claim 2, wherein only media streams relevant for determining said personalized media stream on said at least one second server (103) are identified from said at least one media stream depending on information about said desired view, in particular said desired view angle or picture detail, and send from said at least one first server (102) to said at least one second server (103).

**5.** The system according to claim 1, wherein said information about said desired view, in particular said desired view angle or picture detail, is determined by said at least one client (104) from user input or information about an geo-spatial orientation of said at least one client (104), in particular determined by said at least one client (104) from user interface and sensors respectively.

**6.** The system according to claim 2, adapted to connect or disconnect at least one of said at least one media sources, in particular said at least one camera (101), without interruption of said personalized media stream.

**7.** The system according to claim 1, wherein said at least one media stream is at least one real-time media stream.

**8.** The system according to claim 1, wherein multiple media sources, in particular multiple cameras (101), send multiple media streams.

**9.** The system according to claim 1, wherein said at least one client (104) is adapted to display said at least one media stream, in particular in real-time, or to store said at least one media stream.

**10.** A method for distributing media in a computer network (100), **characterized in that**
- at least one media stream is captured by at least one media source, in particular at least one camera (101), and sent by said at least one media source, in particular said at least one camera (101), to at least one first server (102),
- said at least one media stream is received by said at least one first server (102) from said at least one media source, in particular said at least one camera (101), and sent by said at least one first server (102) to at least one second server (103),
- at least one personalized media stream is determined by said at least one second server (103) depending on at least one of said at least one media stream and information about at least one desired view, in particular viewing angle or picture detail, received by said at least one second server (103) from at least one client (104),
- said at least one personalized media stream is sent by said at least one second server (103), in particular to the respective at least one client (104),
- said desired view, in particular said viewing angle or picture detail, is determined by said client (104) and send by said client (104) to the respective at least one second server 103, and wherein
- said personalized media stream is received by said at least one client (104), and
- wherein a location most suitable for determining said personalized media stream is determined for said at least one client (104) from information about said computer network (100).

**11.** A computer program for distributing media in a computer network (100), **characterized in that** said computer program, when executed on at least two computer (102, 103), causes at least one first computer (102) to receive at least one media stream from at least one media source, in particular at least one camera (101), and sent at least one of said at least one media stream to at least one second computer (103), and causes said at least one second computer (103) to determine at least one personalized media stream depending on said at least one of said at least one media stream and information about at least one desired view, in particular viewing angle or picture detail, received by said at least one second computer (103) from at least one client (104), and to send said at least one personalized media stream to the respective at least on client (104), and wherein a location most suitable for determining said personalized media stream is determined for said at least one client (104) from information about said computer network (100).

**12.** A computer program product for distributing media in a computer network (100) comprising a computer usable medium having a computer readable program, **characterized in that** said computer readable program, when executed on at least two computer (102, 103), causes at least one first computer (102) to receive at least one media stream from at least one media source, in particular at least one camera (101), and sent at least one of said at least one media stream to at least one second computer (103), and causes said at least one second computer (103) to determine at least one personalized media stream depending on said at least one of said at least one media stream and information about at least one desired view, in particular viewing angle or picture detail, received by said at least one second computer (103) from at least one client (104), and to send said at least one personalized media stream to the respective at least on client (104), and wherein a location most suitable for determining said personalized media stream is determined for said at least one client (104) from information about said computer network (100).
